(19) Europäisches Patentamt
European Patent Office
Office européen des brevets

(11) **EP 0 996 120 B1**

(12) **EUROPEAN PATENT SPECIFICATION**

(45) Date of publication and mention
of the grant of the patent:
**13.06.2007 Bulletin 2007/24**

(51) Int Cl.:
***G11B 7/135*** (2006.01)

(21) Application number: **98308703.2**

(22) Date of filing: **23.10.1998**

(54) **Optical pickup compatible with a digital versatile disk and a recordable compact disk using a holographic ring lens**

Mit DVD und beschreibbarer CD kompatibler optischer Abtastkopf mit holographischer Ringlinse

Tête de lecture optique compatible avec un disque numérique polyvalent (DVD) et un disque compact enregistrable (CD-R), utilisant une lentille avec un anneau holographique

(84) Designated Contracting States:
**DE FR GB**

(43) Date of publication of application:
**26.04.2000 Bulletin 2000/17**

(73) Proprietor: **SAMSUNG ELECTRONICS CO., LTD.**
**Suwon-City, Kyungki-do (KR)**

(72) Inventors:
• **Yoo, Jang-Hoon**
**Youngdungpo-gu,**
**Seoul (KR)**

• **Lee, Chul-Woo**
**Yongsan-gu,**
**Seoul (KR)**

(74) Representative: **Neill, Alastair William**
**Appleyard Lees**
**15 Clare Road**
**Halifax**
**West Yorkshire HX1 2HY (GB)**

(56) References cited:
**EP-A- 0 747 893       EP-A- 0 838 812**
**WO-A-98/19303**

**Description**

BACKGROUND OF THE INVENTION

1. Field of the Invention

The present invention relates to an optical pickup apparatus compatible with a digital video disk (DVD) and a recordable compact disk (CD-R), and more particularly, to an optical pickup apparatus which can compatibly record information on and read information from a digital video disk (DVD) and a recordable compact disk (CD-R), respectively, using a holographic lens.

2. Description of the Related Art

An optical pickup apparatus records and reads the information such as video, audio or data at a high density, and various types of recording media are a disk, a card and a tape. Among them, the disk type is primarily used. Recently, in the field of the optical disk apparatus, a laser disk (LD), a compact disk (CD) and a digital video disk (DVD) have been developed. Such an optical disk includes a plastic or glass medium having a certain thickness along an axial direction to which light is incident, and a signal recording surface on which information is recorded and located on the plastic or glass medium.

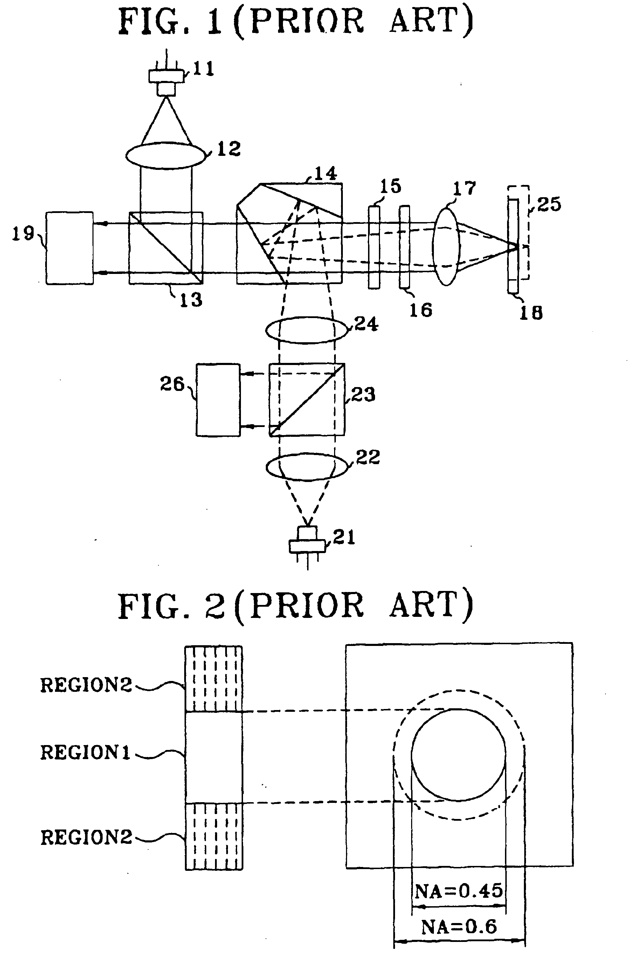

So far, a high-density optical disk system enlarges a numerical aperture of an objective lens to increase a recording density, and uses a short wavelength light source of 635nm or 650nm. Accordingly, the high-density optical disk system can record or read signals on or from a digital video disk, and can also read signals from a CD. However, to be compatible with a recent type of a CD, that is, a recordable CD (CD-R), light having a wavelength of 780nm should be used, due to the recording characteristic of the CD-R recording medium. As a result, using the light beam wavelengths of 780nm and 635 (or 650) nm in a single optical pickup becomes very important for compatibility of the DVD and the CD-R. A conventional optical pickup which is compatible with the DVD and the CD-R will be described below with reference to FIG. 1.

FIG. 1 shows an optical pickup using two laser light diodes as light sources for a DVD and a CD-R and a single objective lens. The FIG. 1 optical pickup uses laser light having a wavelength of 635nm when reproducing a DVD, and uses laser light having a wavelength of 780nm when recording and reproducing a CD-R.

Light having the 635nm wavelength emitted from a first laser light source 11 is incident to a first collimating lens 12, in which the light is shown in a solid line. The first collimating lens 12 enables the incident light beam to be in a parallel light beam. The light beam passing through the first collimating lens 12 is reflected by a beam splitter 13 and then goes to an interference filter prism 14.

Light having the 780nm wavelength emitted from a second laser light source 21 passes through a second collimating lens 22, a beam splitter 23 and a converging lens 24, and then goes to the interference filter prism 14, in which the light is shown in a dotted line. Here, the light beam of the 780nm wavelength is converged by the interference filter prism 14. An optical system having such a structure is called a "finite optical system". The interference filter prism 14 totally transmits the light beam of the 635nm wavelength reflected from the beam splitter 13, and totally reflects the light beam of the 780nm wavelength converged by the converging lens 24. As a result, the light beam from the first laser light source 11 is incident to a quarter-wave plate 15 in the form of a parallel beam by the collimating lens 12, while the light beam from the second laser light source 21 is incident to the quarter-wave plate 15 in the form of a divergent beam by the converging lens 24 and the interference filter prism 14. The light transmitted through the quarter-wave plate 15 passes through a variable aperture 16 having a thin film structure and then is incident to an objective lens 17.

The light beam of the 635nm wavelength emitted from the first laser light source 11 is focussed by the objective lens 17 on an information recording surface in the DVD 18 having a thickness of 0.6mm. Therefore, the light reflected from the information recording surface of the DVD 18 contains information recorded on the information recording surface. The reflected light is transmitted by the beam splitter 13, and is then incident to a photodetector 19 for detecting optical information.

If the finite optical system described above is not used, when the light beam of the 780nm wavelength emitted from the second laser light source 21 is focused on an information recording surface in the CD-R 25 having a thickness of 1.2mm using the above-described objective lens 17, spherical aberration is generated due to a difference in thickness between the DVD 18 and the CD-R 25. The spherical aberration is due to the fact that the distance between the information recording surface of the CD-R 25 and the objective lens 17 is farther than that between the information recording surface of the DVD 18 and the objective lens 17, along an optical axis. To reduce such a spherical aberration, a construction of a finite optical system including the converging lens 24 is required. By using the variable aperture 16 to be described later with reference to FIG. 2, the light beam of the 780nm wavelength forms an optimized beam spot on the information recording surface of the CD-R 25. The light beam of the 780nm wavelength reflected from the CD-R 25 is reflected by the beam splitter 23, and then detected in a photodetector 26.

The thin-film type variable aperture 16 of FIG. 1, as shown in FIG. 2, has a structure which can selectively transmit the light beams incident to the regions whose numerical aperture (NA) is less than or equal to 0.6, which coincides with the diameter o the objective lens 17. That is, the variable aperture 16 is partitioned into two regions based on the numerical aperture (NA) of 0.45 with respect to an optical axis. Among the two regions, a first region 1 transmits both light beams of 635nm wavelength and 780nm wavelength. A second region 2 totally transmits the light beam of the 635nm wavelength and totally reflects the light beam of the 780nm wavelength. The region 1 is a region having a numerical aperture less than or equal to 0.45, and the region 2 is an outer region relative to the region 1 in which a dielectric thin film is coated. The region 1 is comprised of a quartz ($SiO_2$) thin film to remove any optical aberration generated by the dielectric thin film coated region 2.

By using the variable aperture 16, the 780nm wavelength light transmitted through the region 1 having the 0.45 NA or below forms a beam spot appropriate to the CD-R 25 on the information recording surface thereof. Thus, the FIG. 1 optical pickup uses an optimum beam spot when a disk mode is changed from the DVD 18 to the CD-R 25. Accordingly, the FIG. 1 optical pickup is compatible for use with the CD-R.

However, the optical pickup shown in FIG. 1 and as described above should form a "finite optical system" with respect to the 780nm wavelength light in order to remove any spherical aberration generated when changing a DVD compatibly with a CD-R. Also, due to the optical thin film, that is, the dielectric thin film, which is formed in the region 2 of the variable aperture 16 having the NA of 0.45 or above, an optical path difference between the light transmitted through the region 1 having the NA of 0.45 or below and that transmitted through the region 2 having the NA of 0.45 or above, is generated. To eradicate this difference, it is necessary to form an optical thin film in the region 1. Due to this reason, a quartz coating ($SiO_2$) is formed in the region 1 and a multi-layer thin film is formed in the region 2. However, such a fabricating process does not only become complicated but also adjustment of the thickness of the thin film should be performed precisely in units of "$\mu$m". Thus, it has been difficult to mass-produce the optical pickup.

EP 0838812 (Konica) discloses an optical pickup apparatus including a light source for emitting a light flux; and a converging optical system having a first, second and third divided surface, which are divided in the order name from the vicinity of an optical axis of the converging optical system, for converging the light flux emitted from the light source, wherein a beam spot passing through the first and third divided surface is formed onto a first optical information recording medium having a transparent substrate whose thickness is t1, and the beam spot passing through the first and second surfaces is formed onto a second optical information recording medium having a transparent substrate whose thickness is t2 that is more than t1. The optical apparatus further includes an image sensor for receiving a light flux reflected from the first and/or second optical information recording medium. Here, it is noted that the second divided surface may be composed of a hologram or a freznel lens. When the second divided surface is composed of holograms, one of the light flux that is divided into zero-th order diffracted light and first order diffracted light is used to reproduce the first optical disk, and the other is used to reproduced the second optical disk.

EP 747893 (NEC) discloses optical head apparatus in which a holographic optical element is provided to converge or diverge one of first or second wavelength light beams. Here, a combined laser diode and photodetector are incorporated within a single module.

SUMMARY OF THE INVENTION

An object of the present invention is to provide an optical pickup apparatus which is compatible with a digital video disk (DVD) and a recordable compact disk (CD-R), by adopting an infinite optical system and using a holographic lens to remove a spherical aberration generated due to a difference in thickness between optical disks.

Additional objects and advantages of the invention will be set forth in part in the description which follows and, in part, will be obvious from the description, or may be learned by practice of the invention.

To accomplish the above and other objects of the present invention, there is provided an optical pickup apparatus compatible with at least two types of optical recording media, using light means having respective different wavelengths for recording and reading information, the optical pickup apparatus comprising: a plurality of laser light sources to emit light beams having different wavelengths; optical elements to alter optical paths of light beams reflected from an information recording surface of the optical recording media; a photodetector for detecting information of the light beams output from the optical elements; and an objective lens forming light spots on the optical recording media using first and second light beams of respectively different wavelengths the first light beam having a shorter wavelength than the second light beam, the objective lens comprising: an inner region including an optical center of the objective lens; holographic region surrounding the inner region; and an outer region surrounding the holographic region; wherein the inner region transmits the first and second light beams, the holographic region diffracts the second light beam, and the outer region transmits the first light beam, the apparatus being characterised in that a working distance, being a distance between the objective lens and the information recording surface of the optical recording medium along an optical axis, is shorter in a relatively thick optical recording medium than in a relatively thin optical recording medium.

BRIEF DESCRIPTION OF THE DRAWINGS

These and other objects and advantages of the invention will become apparent and more readily appreciated from the following description of the preferred embodiments, taken in conjunction with the accompanying drawings of which:

FIG. 1 is a view showing the construction of an conventional optical pickup;
FIG. 2 is a view for explaining the structure of a conventional variable aperture shown in FIG. 1;
FIG. 3 is a view showing an optical system of an optical pickup according to an embodiment of the present invention;
FIG. 4A is a view showing a positional relationship between a holographic ring lens and an objective lens according to the embodiment of the present invention, and FIG. 4B is a view showing the plane surface of the holographic ring lens;
FIG. 5A is a view showing the plane surface of the holographic ring lens, and FIG. 5B is a graphical view showing that part of the FIG. 5A region which is enlarged;
FIG. 6 is a graphical view showing transmissive efficiency according to the groove depth of the holographic ring lens with regard to two wavelengths; and
FIG. 7 is a view showing that the holographic ring lens and the objective lens are integrally incorporated.

DETAILED DESCRIPTION OF THE PREFERRED EMBODIMENTS

Reference will now made in detail to the present preferred embodiments of the present invention, examples of which are illustrated in the accompanying drawings, wherein like reference numerals refer to the like elements throughout. The embodiments are described below in order to explain the present invention by referring to the figures.

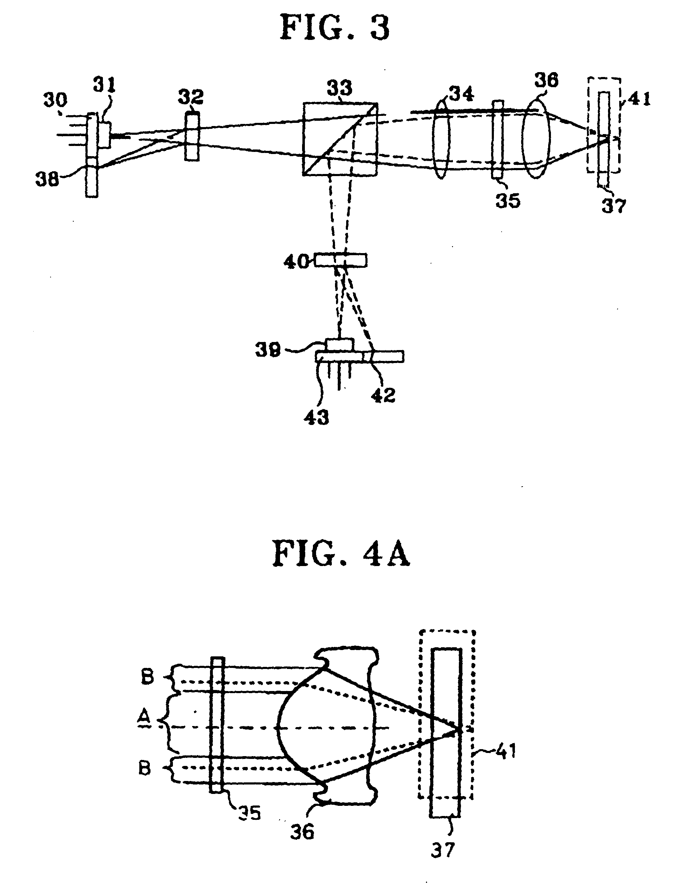

FIG. 3 shows an optical system of an optical pickup according to an embodiment of the present invention. Referring to FIG. 3, the optical pickup apparatus includes two laser light sources 31 and 39 for emitting light beams having different wavelengths, respectively, two holographic beams splitters 32 and 40 for altering optical paths of the light beams reflected from information recording surfaces of first and second types of optical disks, a beam splitter 33 for totally transmitting or reflecting the incident light beam according to the light wavelength, a collimating lens 34 for enabling the incident light beam to be in a parallel form, a holographic ring lens 35 for diffracting the incident light beam according to its wavelength, and an objective lens 36 for focusing the light beams on the respective information recording surfaces of optical disks 37 and 41. Two photodetectors 38 and 42 which detect the light beams reflected from the respective information recording surfaces of the optical disks 37 and 41 and the laser light sources 31 and 39 are integrally incorporated into single modules to form units 30 and 43, respectively. The operation of the optical pickup constructed above will be described below, in which a DVD and a CD-R are described as optical recording media.

First, when recording and reading information on a DVD, a light beam having the 650nm (or 635nm) wavelength is emitted from the first laser light source 31 and is incident to the holographic beam splitter 32, in which the light is shown as a solid line. The incident light beam passes through the holographic beam splitter 32 and proceeds to the beam splitter 33. When recording and reading information about a CD-R, a light beam having the 780nm wavelength is emitted from the second laser light source 39 and is incident to the holographic beam splitter 40, in which the light is shown as a dotted line. The incident light beam passes through the holographic beam splitter 40 and proceeds to the beam splitter 33.

The beam splitter 33 totally transmits the incident light beam of the 650nm wavelength and totally reflects the incident light beam of the 780nm wavelength. The totally transmitted or reflected light beam goes to the holographic ring lens 35 in the form of a parallel beam after passing through the collimating lens 34. The holographic ring lens 35 selectively diffracts the incident light beam according to the wavelength thereof, to prevent the generation of spherical aberration with regard to the light beams focused on the information recording surfaces of the optical disks 37 and 41.

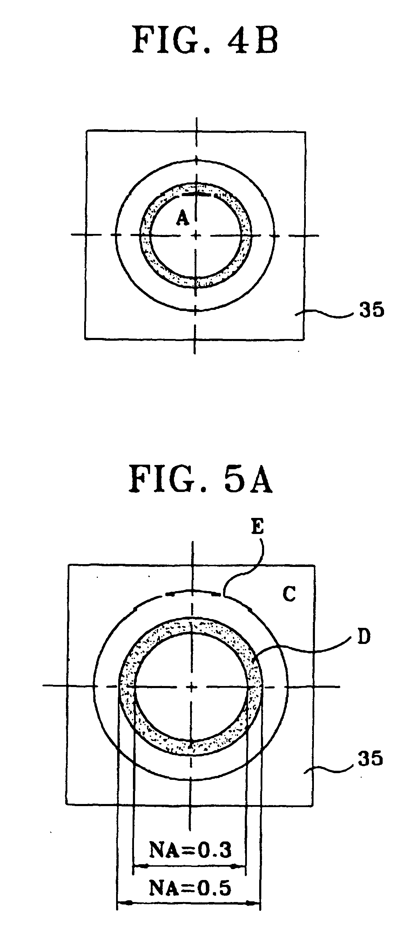

FIG. 4A is a view showing a positional relationship between the holographic ring lens 35 and the objective lens 36. As shown in FIG. 4A, the objective lens 36 is portioned into regions A and B. The region A, being closer to an optical axis of the objective lens, has little effect on a spherical aberration and the region B, being farther from the optical axis, has a large effect on the spherical aberration. Also, the objective lens 36 is most appropriate for a disk having a thin thickness such as a DVD. Thus, when a DVD is exchanged with a thick disk such as a CD-R to operate the optical pickup, the holographic ring lens 35 is required. If the holographic ring lens 35 is not used when recording and reading information on the CD-R, the spherical aberration in the beam spot formed on the information recording surface of the disk becomes large, in which the size is more than 1.7$\mu$m. Generally, the size of the beam spot formed on the information recording surface of the CD-R is 1.4pm. The holographic ring lens 35 diffracts the light beam which is to pass through the region B of the objective lens 36 so as to prevent the generation of spherical aberration, for which a hologram depicted with dots in FIG. 4B is disposed between the outer boundary of the region A and the region B. Accordingly, the light beam which is incident to the holographic ring lens 35 and then passes through the region A of the objective lens 36, passes through the objective lens 36 without any diffraction by the holographic ring lens 35, and then is directly focused on the disk. The light beam which is incident to the holographic ring lens 35 and passes through the region B of the objective lens 36, is diffracted by the holographic ring lens 35 and then proceeds to the objective lens 36. The diffracted light beam passing through the objective lens 36 makes the size of the beam spot focused on the disk smaller, and no spherical aberration is generated. A focal surface of the disk on which the diffracted light beam passing through the region B is focused should coincide with an optimized surface of the disk on which the light beam passing through the region A is focussed. By using the holographic ring-shaped lens 35, a working distance from the surface of the objective lens 36 to the information recording surfaces of the disks becomes shorter in the CD-R 41 rather than in the DVD 37.

FIG. 5A is a view showing the structure of the holographic ring lens 35. A region D where a hologram in the holographic ring lens 35 shown in FIG. 5A is provided, corresponds to the numerical aperture of 0.3~0.5 which is intended to be appropriate for the CD-R. In FIG. 5A, a symbol E indicates the diameter of the objective lens for a DVD whose numerical aperture (NA) is 0.6. Also, the holographic ring lens 35 used in the present invention can selectively adjust the numerical aperture (NA) of the objective lens according to the wavelengths of the light beam, and requires no separate aperture. The holographic ring lens 35 has the same function as a general spherical lens which transmits a light beam in the convergent or divergent form. Further, the holographic ring lens 35 has a negative optical power and uses a phase shift hologram. An optimized depth of grooves of the hologram should be determined so that the holographic ring lens 35 selectively diffracts the incident light beam according to the wavelength thereof. The holographic ring lens 35 is constructed so that the light beam of the 650nm wavelength has a transmissive efficiency close to 100% and the light beam of the 780nm wavelength has a zero-order transmissive efficiency of 0% with respect to a non-diffracted light beam. For that, the phase variation by the groove depth of the holographic ring lens 35 should be 360° with respect to the 650nm wavelength light. Since the phase variation is generated by 360°, the holographic ring lens 35 transmits the 650nm wavelength light. The phase variation should be made by 180° with respect to the 780nm wavelength light, by which the 780nm wavelength light is all diffracted as first-order light. As a result, the holographic ring lens 35 is designed not to diffract the 650 wavelength light, but to diffract the 780nm wavelength light as first-order light. An optimized surface groove depth $d$ of the holographic ring lens 35 for selectively diffracting 650nm and 780nm wavelength light beams is determined by the following equations (1) and (2).

$$\frac{2\pi d}{\lambda}(n-1) = 2m\pi \qquad\qquad (1)$$

$$\frac{2\pi d}{\lambda'}(n'-1) = (2m'+1)\pi \qquad\qquad (2)$$

Here $\lambda$ is the 650nm wavelength, $\lambda'$ is the 780nm wavelength, and n and n' denote an reflective index (1.514520) in the 650nm wavelength and an reflective index (1.511183) in the 780nm wavelength, respectively. In the above equations (1) and (2), if m=3 and m'=2, the depth $d$ becomes about 3.8μm.

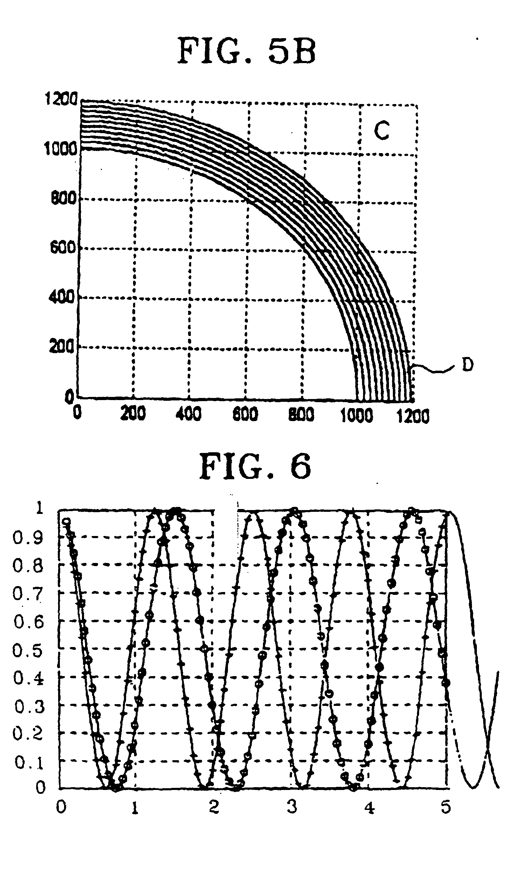

FIG. 5B is a graphical view showing an enlarged view of the hologram region D shown in FIG 5A. The hologram region D has grooves of constant depth by etching or can be manufactured by metal molding. Further, the hologram region D can be formed stepwisely, together with a ring pattern.

FIG. 6 is a graphical view showing the zero-order transmissive efficiency of the holographic ring lens 35 according to the wavelengths of incident lights. When the surface groove dept $d$ is 3.8μm, the 650nm wavelength light is transmitted via the holographic ring lens 35 by 100% as shown by a solid line overlapped with the symbol "++", and the 780nm wavelength light is transmitted via the holographic ring lens 35 by 0% as shown by a solid line overlapped with a circle. At this time, the holographic ring lens 35 diffracts the 780nm wavelength light as the first-order light, in which the diffraction efficiency thereof is 40%.

All of the 650nm wavelength light incident to the holographic ring lens 35 having the above characteristics is transmitted and then proceeds to the objective lens 36. The incident light beam passes through the objective lens 36 and forms a beam spot on the information recording surface of the DVD 37. The light beam reflected from the information recording surface of the DVD 37 is incident to the holographic beam splitter 35. After passing through the holographic ring lens 35, the reflected light beam incident to the collimating lens 34, the beam splitter 33 and then to the holographic beam splitter 32, wherein the holographic beam splitter 32 directs the reflected light beam to the photodetector 38. The 780nm wavelength light incident to the holographic ring lens 35 is transmitted in the region A and then proceeds to the objective lens 36, but is diffracted in the region A and then proceeds to the objective lens 36, but is diffracted in the region B and goes to the objective lens 36, as shown in FIG. 4A. Therefore, the light beam passing through the objective lens 36 forms an optimized beam spot on the information recording surface of the CD-R 41. The light beam reflected from the information recording surface of the CD-R 41 is incident to the beam splitter 33 and then reflected. The reflected light proceeds to the holographic beam splitter 40 and then is incident to the photodetector 42 by altering the optical path.

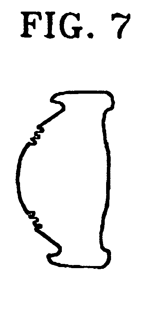

The holographic ring lens 35 having the above functions may be manufactured integrally with an objective lens by being etched or metal molded to a constant depth inwards from one surface of the objective lens. The integrally incorporated holographic ring lens has the same function as the holographic ring lens 35. FIG. 7 is a view showing that the holographic ring lens and the objective lens which are integrally incorporated.

As describe above, the optical pickup apparatus according to the present invention is used compatibly with a DVD and a CD-R, by using a holographic ring lens to eliminate a spherical aberration generated in response to a disk being changed to another disk having a different thickness, in which a working distance is shorter in the case of the CD-R than the DVD. Also, the optical pickup apparatus provides advantages which include ease in construction of a holographic ring lens and good mass-production capabilities.

While only certain embodiments of the invention have been specifically described herein, it will be apparent that numerous modifications may be made thereto without departing from the scope of the invention.

**Claims**

1. An optical pickup apparatus compatible with at least two types of optical recording media (41, 37), using light means having respective different wavelengths for recording and reading information, the optical pickup apparatus comprising:

   a plurality of laser light sources (31, 39) to emit light beams having different wavelengths;
   optical elements (32, 40, 33, 34) to alter optical paths of light beams reflected from an information recording surface of the optical recording media;
   a photodetector (38, 42) for detecting information of the light beams output from the optical elements; and
   an objective lens (36) forming light spots on the optical recording media using first and second light beams of respectively different wavelengths the first light beam having a shorter wavelength than the second light beam, the objective lens comprising:

   an inner region (A) including an optical center of the objective lens;
   holographic region (D) surrounding the inner region; and
   an outer region (E) surrounding the holographic region (D);

   wherein the inner region (A) transmits the first and second light beams, the holographic region (D) diffracts the second light beam, and the outer region (E) transmits the first light beam, the apparatus being **characterised in that** a working distance, being a distance between the objective lens and the information recording surface of the optical recording medium along an optical axis, is shorter in a relatively thick optical recording medium than in a relatively thin optical recording medium.

2. The optical pickup apparatus according to claim 1, wherein the holographic region (D) is phase-shifted.

3. The optical pickup apparatus according to claim 1, wherein a focal surface of the second light beam passing through the holographic region (D) that is focused on the optical recording media coincides with a focal surface of the second light beam passing through the inner region that is focused on the optical recording media, when reproducing relatively thick optical recording media (41).

4. The optical pickup apparatus according to claim 3, wherein the holographic region (D) diffracts the second light beam as first-order diffracted light and does not diffract the first light beam.

5. The optical pickup apparatus according to claim 3, wherein the holographic region (D) diffracts the second light beam as first-order diffracted light.

6. The optical pickup apparatus according to claim 1, wherein the holographic region (D) has grooves of a constant depth in order to diffract the second light beam.

7. The optical pickup apparatus according to claim 6, wherein the holographic region (D) diffracts the second light beam as first-order diffracted light.

8. The optical pickup apparatus according to claim 7, wherein the holographic region (D) has a zero-order transmissive efficiency of approximately 100% for the first light beam, and has a first-order diffraction efficiency of approximately 40% for the second light beam.

9. The optical pickup apparatus according to claim 1, wherein the holographic region (D) has grooves formed in a stepwise form.

10. The optical pickup apparatus according to claim 1, wherein the objective lens (36) does not diffract a relatively short wavelength light and diffracts a relatively long wavelength light according to the wavelengths of light to be incident.

11. The optical pickup apparatus according to claim 1, wherein the objective lens (36) is optimised with respect to a thick optical recording medium in thickness.

12. The optical pickup apparatus according to claim 1, wherein the holographic region (D) has the shape of a ring.

13. The optical pickup apparatus according to claim 6,
wherein the depth of the groove causes phase variation according to the wavelengths of light emitted from the laser light sources.

14. The optical pickup apparatus according to claim 13, wherein the phase variation is produced by 360° with respect to a relatively short wavelength of the incident light beam and by 180° with respect to a relatively long wavelength of the incident light beam, between the first light beam and the second light beam emitted from the laser light sources (31, 39).

15. The optical pickup apparatus according to claim 14, wherein the holographic region (D) does not diffract the incident light beam when the phase variation 360° is generated, while the holographic region diffracts the incident light beam to reduce the spherical aberration of a beam spot focused on the optical recording medium when the phase variation of 180° is produced.

16. The optical pickup apparatus according to claim 1, wherein the optical elements are disposed between the laser light sources (31, 39) and the objective lens (36).

17. The optical pickup apparatus according to claim 1, wherein the optical elements are holographic beam splitters.

18. The optical pickup apparatus according to claim 1, wherein the photodetectors and the corresponding laser light sources are integrally incorporated into a single unit.

**Patentansprüche**

1. Optische Abtastvorrichtung, die mit mindestens zwei Arten von optischen Aufzeichnungsmedien (41, 37) kompatibel ist, die Leuchtmittel verwendet, die jeweils verschiedene Wellenlängen für das Aufzeichnen und das Lesen von Informationen aufweisen, wobei die optische Abtastvorrichtung Folgendes aufweist:

mehrere Laserlichtquellen (31, 39), um Lichtstrahlen mit verschiedenen Wellenlängen auszusenden;
optische Elemente (32, 40, 33, 34), um Lichtwege von Lichtstrahlen, die von einer Informationen aufzeichnenden Fläche der optischen Aufzeichnungsmedien reflektiert werden, zu verändern;
einen Lichtempfänger (38, 42), um Informationen der Lichtstrahlen, die von den optischen Elementen ausgegeben werden, zu erfassen; und
eine Objektivlinse (36), die Lichtpunkte auf den optischen Aufzeichnungsmedien bildet, indem erste und zweite Lichtstrahlen mit jeweils unterschiedlicher Wellenlänge verwendet werden, wobei der erste Lichtstrahl eine kürzere Wellenlänge als der zweite Lichtstrahl hat, wobei die Objektivlinse Folgendes aufweist:

einen inneren Bereich (A), die ein optisches Zentrum der Objektivlinse umfasst;
einen holografischen Bereich (D), der den inneren Bereich umgibt; und
einen äußeren Bereich (E), der den holografischen Bereich (D) umgibt,

wobei der innere Bereich (A) den ersten und den zweiten Lichtstrahl überträgt, der holografische Bereich (D) den zweiten Lichtstrahl beugt und der äußere Bereich (E) den ersten Lichtstrahl überträgt, wobei die Vorrichtung **dadurch gekennzeichnet ist, dass** eine Arbeitsentfernung, die eine Entfernung zwischen der Objektivlinse und der Informationen aufzeichnenden Fläche des optischen Aufzeichnungsmediums entlang einer optischen Achse ist, in einem verhältnismäßig dicken optischen Aufzeichnungsmedium kürzer als in einem verhältnismäßig dünnen Aufzeichnungsmedium ist.

2. Optische Abtastvorrichtung nach Anspruch 1, wobei der holografische Bereich (D) phasenverschoben ist.

3. Optische Abtastvorrichtung nach Anspruch 1, wobei eine Brennfläche des zweiten Lichtstrahls, der den holografischen Bereich (D) durchquert, der auf die optischen Aufzeichnungsmedien fokussiert ist, mit einer Brennfläche des zweiten Lichtstrahls, der den inneren Bereich durchquert, der auf die optischen Aufzeichnungsmedien fokussiert ist, zusammentrifft, wenn verhältnismäßig dicke optische Aufzeichnungsmedien (41) wiedergegeben werden.

4. Optische Abtastvorrichtung nach Anspruch 3, wobei der holografische Bereich (D) den zweiten Lichtstrahl als gebeugtes Licht erster Ordnung beugt und den ersten Lichtstrahl nicht beugt.

5. Optische Abtastvorrichtung nach Anspruch 3, wobei der holografische Bereich (D) den zweiten Lichtstrahl als gebeugtes Licht erster Ordnung beugt.

6. Optische Abtastvorrichtung nach Anspruch 1, wobei der holografische Bereich (D) Rillen mit gleichbleibender Tiefe aufweist, um den zweiten Lichtstrahl zu beugen.

7. Optische Abtastvorrichtung nach Anspruch 6, wobei der holografische Bereich (D) den zweiten Lichtstrahl als gebeugtes Licht erster Ordnung beugt.

8. Optische Abtastvorrichtung nach Anspruch 7, wobei der holografische Bereich (D) eine Transmissionseffizienz nullter Ordnung von annähernd 100% für den ersten Lichtstrahl aufweist und eine Beugungseffizienz erster Ordnung von annähernd 40% für den zweiten Lichtstrahl aufweist.

9. Optische Abtastvorrichtung nach Anspruch 1, wobei der holografische Bereich (D) Rillen aufweist, die in einer gestuften Form gebildet sind.

10. Optische Abtastvorrichtung nach Anspruch 1, wobei die Objektivlinse (36) ein Licht mit einer verhältnismäßig kurzen Wellenlänge nicht beugt und ein Licht mit einer verhältnismäßig langen Wellenlänge entsprechend den Wellenlängen des Lichts, das einfallen soll, beugt.

11. Optische Abtastvorrichtung nach Anspruch 1, wobei die Objektivlinse (36) hinsichtlich eines dicken optischen Aufzeichnungsmediums in ihrer Dicke optimiert ist.

12. Optische Abtastvorrichtung nach Anspruch 1, wobei der holografische Bereich (D) die Form eines Ringes aufweist.

13. Optische Abtastvorrichtung nach Anspruch 6, wobei die Tiefe der Rille eine Phasenänderung entsprechend den Wellenlängen des Lichts, das von den Laserlichtquellen ausgesendet wird, verursacht.

14. Optische Abtastvorrichtung nach Anspruch 13, wobei zwischen dem ersten Lichtstrahl und dem zweiten Lichtstrahl, die von den Laserlichtquellen (31, 39) ausgesendet werden, die Phasenänderung von 360° in Bezug auf eine verhältnismäßig kurze Wellenlänge des einfallenden Lichtstrahls und von 180° in Bezug auf eine verhältnismäßig lange Wellenlänge des einfallenden Lichtstrahls erzeugt wird.

15. Optische Abtastvorrichtung nach Anspruch 14, wobei der holografische Bereich (D) den einfallenden Lichtstrahl nicht beugt, wenn die Phasenänderung von 360° erzeugt wird, während der holografische Bereich den einfallenden Lichtstrahl beugt, um die sphärische Aberration eines Strahlflecks zu verringern, der auf dem optischen Aufzeichnungsmedium fokussiert ist, wenn die Phasenänderung von 180° erzeugt wird.

16. Optische Abtastvorrichtung nach Anspruch 1, wobei die optischen Elemente zwischen den Laserlichtquellen (31, 39) und der Objektivlinse (36) angeordnet sind.

17. Optische Abtastvorrichtung nach Anspruch 1, wobei die optischen Elemente holografische Strahlteiler sind.

**EP 0 996 120 B1**

**18.** Optische Abtastvorrichtung nach Anspruch 1, wobei die Lichtempfänger und die entsprechenden Laserlichtquellen vollständig in einer einzelnen Einheit eingebaut sind.

**Revendications**

**1.** Appareil à tête de lecture optique compatible avec au moins deux types de milieux d'enregistrement optique (41,37), utilisant des moyens lumineux ayant des longueurs d'onde différentes respectives pour enregistrer et lire des informations, l'appareil à tête de lecture optique comprenant :

une pluralité de sources de lumière laser (31,39) pour émettre des faisceaux lumineux ayant des longueurs d'onde différentes ;
des éléments optiques (32,40,33,34) pour modifier les trajets optiques des faisceaux lumineux réfléchis depuis une surface d'enregistrement d'informations des milieux d'enregistrement optique ;
un photodétecteur (38,42) pour détecter des informations à partir de la sortie des faisceaux lumineux provenant des éléments optiques ; et
une lentille d'objectif (36) formant des points lumineux sur les milieux d'enregistrement optique en utilisant des premier et second faisceaux lumineux de longueurs d'onde respectivement différentes, le premier faisceau lumineux ayant une plus courte longueur d'onde que le second faisceau lumineux, la lentille d'objectif comprenant :

une région intérieure (A) incluant un centre optique de la lentille d'objectif ;
une région holographique (D) entourant la région intérieure ; et
une région extérieure (E) entourant la région holographique (D) ;

la région intérieure (A) transmettant les premier et second faisceaux lumineux, la région holographique (D) diffractant le second faisceau lumineux et la région extérieure (E) transmettant le premier faisceau lumineux, l'appareil étant **caractérisé en ce qu'**une distance de travail, qui est une distance entre la lentille d'objectif et la surface d'enregistrement d'informations du milieu d'enregistrement optique le long d'un axe optique, est plus courte dans un milieu d'enregistrement optique relativement épais que dans un milieu d'enregistrement optique relativement mince.

**2.** Appareil à tête de lecture optique selon la revendication 1, dans lequel la région holographique (D) est décalée en phase.

**3.** Appareil à tête de lecture optique selon la revendication 1, dans lequel une surface focale du second faisceau lumineux passant au travers de la région holographique (D) qui est focalisé sur les milieux d'enregistrement optique coïncide avec une surface focale d'un second faisceau lumineux passant au travers de la région intérieure qui est focalisé sur les milieux d'enregistrement optique, lorsque l'on reproduit des milieux d'enregistrement optique (41) relativement épais.

**4.** Appareil à tête de lecture optique selon la revendication 3, dans lequel la région holographique (D) diffracte le second faisceau lumineux sous la forme de lumière diffractée de premier ordre et ne diffracte pas le premier faisceau lumineux.

**5.** Appareil à tête de lecture optique selon la revendication 3, dans lequel la région holographique (D) diffracte le second faisceau lumineux sous la forme de lumière diffractée de premier ordre.

**6.** Appareil à tête de lecture optique selon la revendication 1, dans lequel la région holographique (D) comporte des sillons d'une profondeur constante pour diffracter le second faisceau lumineux.

**7.** Appareil à tête de lecture optique selon la revendication 6, dans lequel la région holographique (D) diffracte le second faisceau lumineux sous la forme de lumière diffractée de premier ordre.

**8.** Appareil à tête de lecture optique selon la revendication 7, dans lequel la région holographique (D) a une efficacité de transmission d'ordre zéro d'approximativement 100 % pour le premier faisceau lumineux et a une efficacité de diffraction de premier ordre d'approximativement 40 % pour le second faisceau lumineux.

**9.** Appareil à tête de lecture optique selon la revendication 1, dans lequel la région holographique (D) a des sillons formés progressivement.

10. Appareil à tête de lecture optique selon la revendication 1, dans lequel la lentille d'objectif (36) ne diffracte pas une lumière de longueur d'onde relativement courte et diffracte une lumière de longueur d'onde relativement longue selon les longueurs d'onde de la lumière devant être incidente.

11. Appareil à tête de lecture optique selon la revendication 1, dans lequel la lentille d'objectif (36) est optimisée en épaisseur par rapport à un milieu d'enregistrement optique épais.

12. Appareil à tête de lecture optique selon la revendication 1, dans lequel la région holographique (D) a la forme d'un anneau.

13. Appareil à tête de lecture optique selon la revendication 6, dans lequel la profondeur du sillon provoque une variation de phase selon les longueurs d'onde de la lumière émise depuis les sources de lumière laser.

14. Appareil à tête de lecture optique selon la revendication 13, dans lequel la variation de phase est produite à hauteur de 360° par rapport à une longueur d'onde relativement courte du faisceau lumineux incident et à raison de 180° par rapport à une longueur d'onde relativement longue du faisceau lumineux incident, entre le premier faisceau lumineux et le second faisceau lumineux émis depuis les sources de lumière laser (31,39).

15. Appareil à tête de lecture optique selon la revendication 14, dans lequel la région holographique (D) ne diffracte pas le faisceau lumineux incident lorsqu'il est généré une variation de phase de 360°, tandis que la région holographique diffracte le faisceau lumineux incident pour réduire l'aberration sphérique du point produit par le faisceau lumineux focalisé sur le milieu d'enregistrement optique lorsqu'il est produit une variation de phase de 180°.

16. Appareil à tête de lecture optique selon la revendication 1, dans lequel les éléments optiques sont disposés entre les sources de lumière laser (31,39) et la lentille d'objectif (36).

17. Appareil à tête de lecture optique selon la revendication 1, dans lequel les éléments optiques sont des diviseurs de faisceaux holographiques.

18. Appareil à tête de lecture optique selon la revendication 1, dans lequel les photodétecteurs et les sources lumineuses laser correspondantes sont intégralement incorporés dans une unité unique.

# FIG. 1 (PRIOR ART)

# FIG. 2 (PRIOR ART)

REGION2

REGION1

REGION2

NA=0.45

NA=0.6

# FIG. 3

# FIG. 4A

# FIG. 4B

# FIG. 5A

# FIG. 5B

# FIG. 6

# FIG. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0838812 A, Konica
- EP 747893 A
- EP NEC A